# EUROPEAN PATENT APPLICATION

(11) **EP 4 345 519 A1**
(43) Date of publication of application: **03.04.2024**
(21) Application number: 23200720.3
(22) Date of filing: 29.09.2023
(51) Int. Cl.: G02B 6/44

(54) **FIBER OPTIC CABLE ASSEMBLY HAVING JUNCTION SHELLS AND METHOD OF PREPARING SAME**

(30) Priority: 30.09.2022 US 202263411826 P
(71) Applicant: Corning Research & Development Corporation, Corning, New York 14831 (US)
(72) Inventor: FAULKNER, Michael, Todd, North Carolina, 28630 (US); HORAN, Stephen Robert, North Carolina, 28601 (US); NIELSEN, Lars Kristian, North Carolina, 28037 (US)
(74) Representative: Sadler, Peter Frederick

(57) **Abstract**

A fiber optic cable assembly including a main cable portion having a plurality of subunit cables and tap points at which the subunit cables are separated from the main cable portion. A junction shell is positioned at each tap point. The subunit cable is pivotable to two orientations relative to the main cable portion in the junction shell.

## Description

### Priority Application

This application claims the benefit of priority of U.S. Provisional Application No. 63/411,826, filed on September 30, 2022, the content of which is relied upon and incorporated herein by reference in its entirety.

### Technical Field

This disclosure relates generally to fiber optic cables, and more particularly to fiber optic cable assemblies including multi-directional junction shells at tap points along a length of the cables, and to methods for assembly and installation of such fiber optic cable assemblies.

### Background

Data center designs and cabling infrastructure are increasingly complex and are of ever-increasing size. Data centers utilize multi-fiber cables to interconnect and provide signals between building distribution frames and/or to individual equipment. Current fiber optic technology includes increasing the density of optical fibers in the cabling. By doing so, the optical fiber technology addresses space limitations while meeting performance demands. Fiber optic cables are advantageous for those reasons as well as providing wide bandwidth data transmission and transporting multiple signals and traffic types.

The cost to deploy these networks is significant. One way to improve infrastructure installation efficiency is to design and manufacture the components for a specific installation. This may include terminating fiber optic cables with connectors at specific lengths before the cable ships to the installation site. The factory-assembled cables may then be tested and packaged for shipment. Once these factory-assembled cables arrive at the installation site, they may be installed directly out of the packaging. The installer needs only to unpack and route the factory-assembled cables and couple the factory-terminated connectors to equipment. Because the connectors are terminated prior to shipping, a significant amount of time, effort, and cost is saved at the installation site as compared to on-site assembly of connectors.

While factory assembly of the fiber optic component assemblies is largely successful, further addressing challenges to efficient handling, routing, and/or connection is desirable.

### Summary

In one aspect of the disclosure, a fiber optic cable assembly includes a main cable portion having a plurality of subunit cables, one or more tap points along a length of the main cable portion at which at least one subunit cable of the plurality of subunit cables is separated from a remainder of the plurality of subunit cables, and a junction shell at at least one of the tap points is disclosed. The junction shell provides a tap point at which the at least one subunit cable is pivotable between two orientations relative to the main cable portion. The junction shell includes a tubular body having a side wall, a main passage that opens at opposing ends of the tubular body, and an auxiliary passage that extends through the side wall and opens to the main passage between the opposing ends at one end of the auxiliary passage and opens to an outer surface of the side wall at another end of the auxiliary passage. The auxiliary passage includes a first channel that extends in a direction of the main passage and a second channel that extends in an outwardly direction from the main passage. The main passage receives the plurality of subunit cables at one of the opposing ends, and the auxiliary passage receives the at least one subunit cable of the plurality of subunit cables in one of the first channel or the second channel.

In one embodiment, the auxiliary passage may include a gap that separates the first channel from the second channel. The at least one subunit cable of the plurality of subunit cables may be movable out of the first channel and into the gap. In one embodiment, the gap may be tapered with a narrowest portion adjacent the first channel. Moreover, dimensions of the gap and dimensions of the at least one subunit cable of the plurality of subunit cables may produce an interference fit between the gap and the at least one subunit cable of the plurality of subunit cables. In one embodiment, the first channel and the second channel may intersect in the auxiliary passage. In one embodiment, at least a portion of the second channel may be oriented perpendicularly to the main passage to position the at least one subunit cable of the plurality of subunit cables in a perpendicular orientation relative to the main cable portion in the main passage.

In one embodiment, the tubular body may include a shoulder adjacent the auxiliary passage for shielding the at least one subunit cable of the plurality of subunit cables at the tap point. Additionally, the tubular body may include a seam in the side wall at which the tubular body is configured to be opened to receive the main cable portion. The seam may receive a pin to lock the seam. In one embodiment, the junction shell may be movable along the main cable portion.

In another aspect of the disclosure, a junction shell for use with a main cable portion including a plurality of subunit cables is disclosed. The junction shell includes a tubular body having a side wall, a main passage that opens at opposing ends of the tubular body, and an auxiliary passage that extends through the side wall and opens to the main passage between the opposing ends at one end of the auxiliary passage and opens to an outer surface of the side wall at another end of the auxiliary passage. The auxiliary passage includes a first channel that extends in a direction of the main passage and a second channel that extends in an outwardly direction from the main passage. The main passage is configured to receive the plurality of subunit cables at one of the opposing ends. The auxiliary passage is configured to receive at least one subunit cable of the plurality of subunit cables in one of the first channel or the second channel at a tap point along a length of the main cable portion. At the tap point, at least one subunit cable of the plurality of subunit cables is separated from a remainder of the plurality of subunit cables.

In one embodiment, the auxiliary passage may include a gap that separates the first channel from the second channel, the gap being configured to receive the at least one subunit cable of the plurality of subunit cables from the first channel. In one embodiment, the gap may be tapered with a narrowest portion adjacent the first channel. Moreover, dimensions of the gap may be configured to produce an interference fit between the gap and the at least one subunit cable of the plurality of subunit cables. In one embodiment, the first channel and the second channel may intersect in the auxiliary passage. In one embodiment, at least a portion of the second channel may be oriented perpendicularly to the main passage and is configured to position the at least one subunit cable of the plurality of subunit cables in a perpendicular orientation relative to the main cable portion in the main passage.

In one embodiment, the tubular body may include a shoulder adjacent the auxiliary passage that is configured to shield the at least one subunit cable of the plurality of subunit cables at the tap point. Additionally, the tubular body may include a seam in the side wall at which the tubular body is configured to be opened to receive the main cable portion. The seam may receive a pin to lock the seam. In one embodiment, the junction shell may be configured to be movable along the main cable portion.

In a further aspect of the disclosure, a method of preparing a fiber optic cable assembly including a main cable portion having a plurality of subunit cables is disclosed. The method includes placing a junction shell around the main cable portion. The junction shell includes a tubular body having a side wall, a main passage that opens at opposing ends of the tubular body, and an auxiliary passage that extends through the side wall and opens to the main passage between the opposing ends at one end of the auxiliary passage and opens to an outer surface of the side wall at another end of the auxiliary passage. In the method, placing the junction shell includes positioning the main cable portion in the main passage. The method further includes separating at least one subunit cable of the plurality of subunit cables from the main cable portion; positioning the separated at least one subunit cable of the plurality of subunit cables in the auxiliary passage; and moving the junction shell to a predetermined tap point along the main cable portion.

In one embodiment, the side wall may include a seam and placing the junction shell includes opening the side wall at the seam to place the main cable portion in the main passage from a direction perpendicular to the tubular body. In one embodiment, the junction shell includes a pin and following placing the junction shell, the method may further include inserting the pin to lock the seam.

In one embodiment, the auxiliary passage may include a first channel that extends in a direction of the main passage and a second channel that is spaced apart from the first channel and that extends in an outwardly direction from the main passage. Prior to shipping the fiber optic cable assembly, the method may include positioning the separated at least one subunit cable of the plurality of subunit cables in the first channel.

In a further aspect of the disclosure, a method of installing the fiber optic cable assembly described here is disclosed. With at least one subunit cable of the plurality of subunit cables in the first channel, the method includes routing the fiber optic cable assembly at an installation site. Subsequently, the method includes moving the at least one subunit cable of the plurality of subunit cables in the first channel to the second channel.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic view of a data center in accordance with one aspect of the disclosure.
Fig. 2 is a schematic view of one embodiment of a fiber optic distribution cable assembly illustrating a main cable portion and multiple tap cables and connectors.
Fig. 3 is a perspective view of a section of the fiber optic distribution cable.
Fig. 4 is a perspective view of a section of a subunit cable of the distribution cable shown in Fig. 3.
Fig. 5 is an enlarged view of a junction shell at a tap point with a tap cable in one position.
Fig. 6 is the junction shell of Fig. 5 with a tap cable shown in a different position.
Fig. 7 is a perspective view of one embodiment of the junction shell shown in Fig. 5 separate from a fiber optic distribution cable.
Fig. 8 is a plan view of the junction shell of Fig. 7.
Fig. 9 is a cross section of the junction shell taken along section line 9-9 in Fig. 8.
Fig. 10 is another plan view of the junction shell of Fig. 7.

### Detailed Description

Various embodiments will be further clarified by examples in the description below. In general, the description relates to fiber optic distribution cable assemblies having one or more junction shells slidably received on a main cable portion. The assemblies are factory-constructed and find use in data centers and the like in which a high density of optical fibers is desirable. Exemplary fiber optic distribution cable assemblies permit pivotable motion of various subunit cables of the assembly at the junction shell and form a tap point of the assembly. Pivotable motion of the subunit cables is selectable between a first position, i.e., an installation position, in which the distribution cable assembly is routable in a pathway within a data center, for example, and a second position, i.e., an operational position, in which one or more of selected subunits are pivoted for attachment to downstream cabling/equipment. At each position, the junction shell secures the selected cable relative to the fiber optic distribution cable. Advantageously, distribution cable assemblies may be fully assembled at a factory and shipped to an installation site with the junction shells pre-positioned and subunit cables located in their installation positions at their respective tap points. At the installation site and following routing of the distribution cable, technicians pivot each individual subunit cable within the junction shell to their operational position for connection to downstream components. No field assembly is required. The distribution cable assemblies according to disclosed embodiments eliminate significant labor at the installation site and so reduce overall costs of installation at the data center. These and other features of distribution cable assemblies according to embodiments of the disclosure are discussed in more detail below.

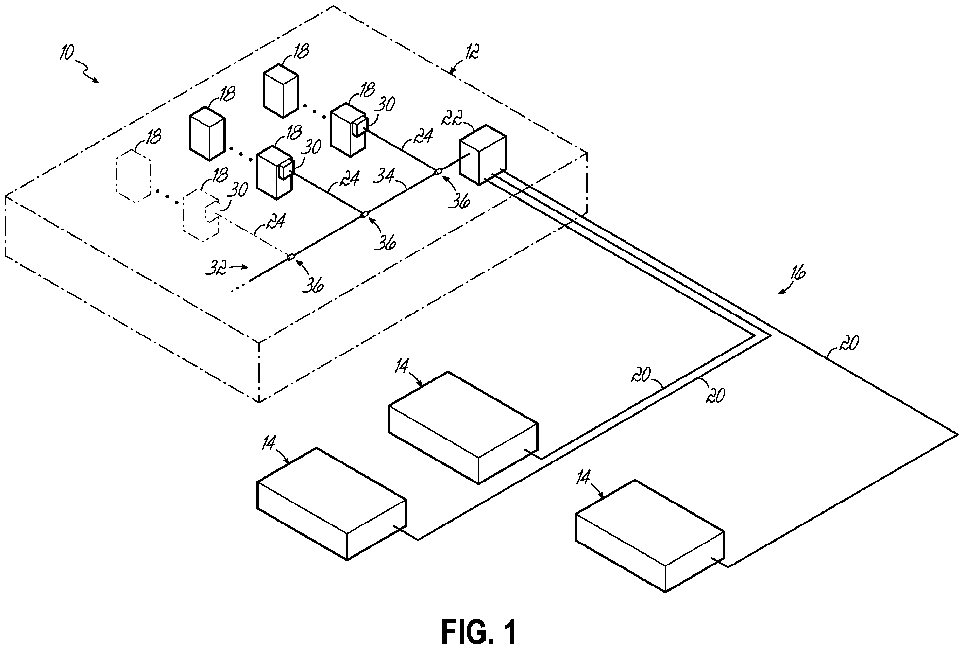

As illustrated in Fig. 1, a data center 10 may include a collection of buildings (referred to as a data center campus) having, for example, a main building 12 and one or more auxiliary buildings 14 in proximity to the main building 12. While three auxiliary buildings are shown, there may be more or fewer depending on the size of the campus. The data center 10 provides for a local fiber optic network 16 that interconnects the auxiliary buildings 14 with the main building 12. The local fiber optic network 16 allows network equipment 18 in the main building 12 to communicate with various network equipment (not shown) in the auxiliary buildings 14. In the exemplary embodiment shown, the local fiber optic network 16 includes trunk cables 20 extending between the main building 12 and each of the auxiliary buildings 14. Trunk cables 20 include a high fiber-count arrangement of optical fibers for passing data and other information through the local fiber optic network 16. In the example illustrated in Fig. 1, the trunk cables 20 from the auxiliary buildings 14 are routed to one or more distribution cabinets 22 (one shown) housed in the main building 12.

Within the main building 12, indoor fiber optic cables 24 are routed between the network equipment 18 and the distribution cabinet 22. The indoor cables 24 generally include a high fiber-count arrangement of optical fibers for passing data and other information from the distribution cabinet 22 to the network equipment 18. Although only the interior of the main building 12 is schematically shown in Fig. 1 and discussed above, each of the auxiliary buildings 14 may house similar equipment for similar purposes. Thus, each of the trunk cables 20 may be routed to a distribution cabinet in one of the auxiliary buildings 14 in a manner similar to that described above. Furthermore, each of the auxiliary buildings 14 may include indoor cables that extend between network equipment and the distribution cabinets of the auxiliary building 14.

Although not shown in Fig. 1, the network equipment 18 in the main building 12 or an auxiliary building 14 may be arranged in one or more data halls that generally include a plurality of spaced-apart rows on one or both sides of an access pathway. This arrangement organizes the large number of equipment, fiber optic cables, fiber optic connections, etc. in the buildings 12, 14. Each of the rows includes a plurality of equipment racks or cabinets that are vertically arranged frames for holding various network equipment 18 of the data center 10. In one common arrangement, and as further schematically illustrated in Fig. 1, each row may include a patch panel 30 at the front or head end of the row of equipment 18. The patch panel 30 represents a termination point of at least some of the optical fibers carried by the indoor cables 24. Aspects of the present disclosure are directed to an improved fiber optic distribution cable assembly for use as indoor cables 24 and configured to be connected to the patch panel 30.

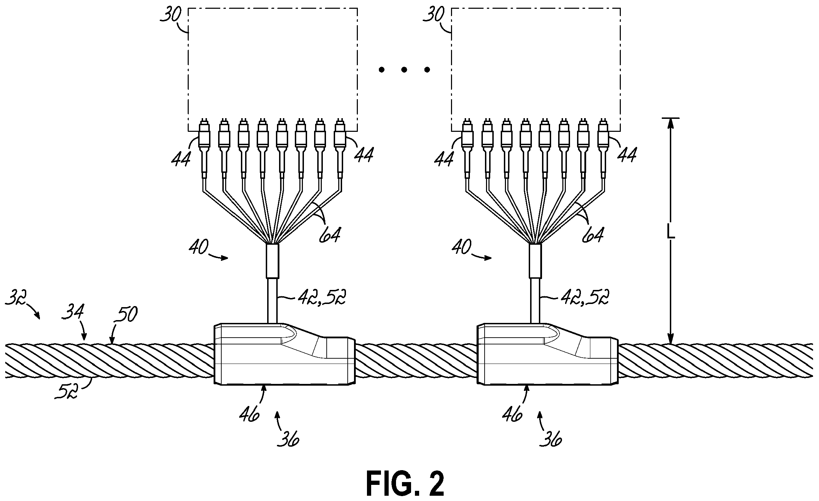

To that end, Figs. 1 and 2 illustrate an exemplary fiber optic distribution cable assembly 32 in accordance with an embodiment of the disclosure. Although the fiber optic distribution cable assembly 32 will be discussed in more detail below in the context of the indoor cables 24 for connection between the patch panel 30 and the distribution cabinet 22, the fiber optic distribution cable assembly 32 is not limited to such an application. Accordingly, the fiber optic distribution cable assembly 32 may be used in other contexts of a data center, or other contexts of a fiber optic network more generally. For example, the fiber optic distribution cable assembly 32 may be used within a row of equipment racks to establish connections between the patch panel 30 and the network equipment 18 in different racks of that row.

In general, and with reference to Fig. 2, the fiber optic distribution cable assembly 32 includes a main cable portion 34 having one end (not shown) for establishing connections at a source location (e.g., a distribution frame or patch panel), a plurality of branch or tap points 36 along the main cable portion 34, and a plurality of tap cable portions 40 each extending from a respective tap point 36 for establishing connections at a destination location (e.g., a patch panel or network equipment in an equipment rack). Thus, the fiber optic distribution cable assembly 32 is a point-to-multipoint assembly that can avoid the need to separately install individual cables from the source location to each destination location.

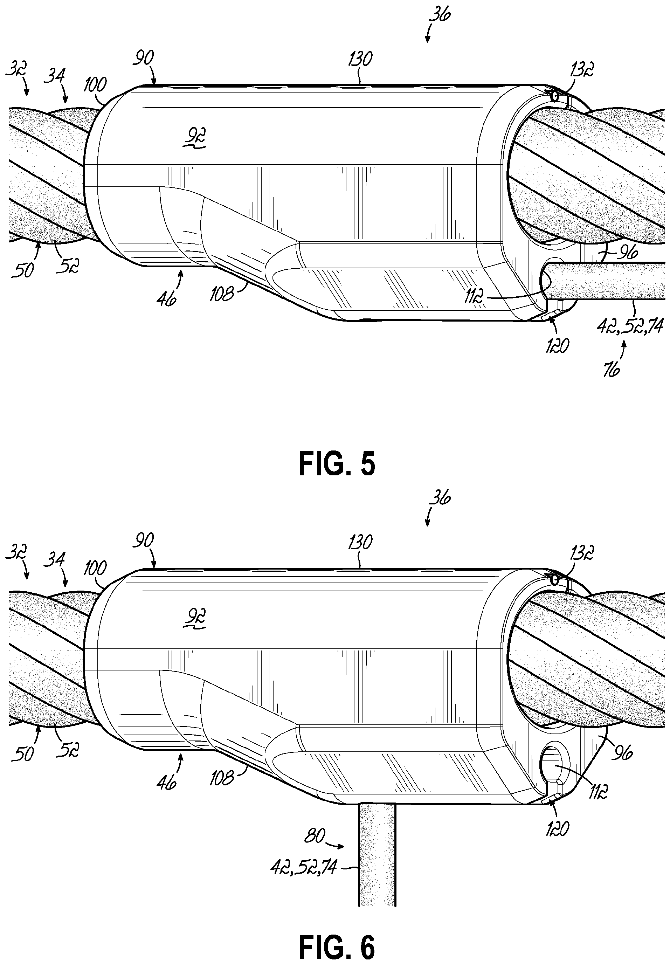

Each of the plurality of tap cable portions 40 includes a tap cable 42 and tap connectors 44 at a tap end or downstream end. In the exemplary embodiment, two tap cable portions 40 are shown though embodiments may include many more than two tap cable portions 40. One or more of the tap points 36 is defined by a junction shell 46 (described with reference to Figs. 5-10 below) that permit pivotable movement of the tap cable 42 therein.

The tap points 36 have a distribution pattern along the main cable portion 34 that generally corresponds to the spacing between the rows of equipment racks in the building 12 (and, therefore, the patch panels 30 at the ends of the rows) in which the fiber optic distribution cable assembly 32 is being installed. In this way, when the fiber optic distribution cable assembly 32 is installed, the junction shells 46 are generally disposed adjacent the patch panels 30, as is depicted in Fig. 1. Thus, in one embodiment, the tap points 36 may be uniformly spaced along the length of the main cable portion 34 and correspond to uniformly spaced rows of equipment racks. In an alternative embodiment, however, the tap points 36 as indicated by the junction shells 46 may be non-uniformly spaced along the length of the main cable portion 34 and correspond to non-uniformly spaced rows. And as mentioned above, in alternative embodiments where the fiber optic distribution cable assembly 32 extends to different network equipment 18 in different equipment racks within a row, the tap points 36 as indicated by the junction shells 46 may be spaced along the length of the main cable portion 34 to correspond to the spacing between the different equipment racks of the row.

The fiber optic distribution cable assembly 32 may be entirely factory-constructed. In that regard, the junction shells 46 may be prepositioned and the tap cable portions 40 are pre-connectorized with the tap cables 42 extending a predetermined length L from the main cable portion 34. By way of example, connectors 44 may each be an MPO (multi-fiber push on) connector, which may hold twelve optical fibers, twenty-four optical fibers, thirty-six optical fibers, or ninety-six optical fibers, or another number as suitable per the design parameters for the fiber optic distribution cable assembly 32.

In the example shown, the main cable portion 34 includes a cable bundle 50 of a plurality of subunit cables 52. Each subunit cable 52 is configured to carry a pre-selected number of optical fibers. Although the main cable portion 34 is shown as including eight subunit cables 52, the number of subunit cables 52 may be more or fewer than this number in alternative embodiments. The fiber optic distribution cable assembly 32 and/or the subunit cables 52 may have generally circular cross-sections, although other cross-sections (e.g., oval, elliptical, etc.) may be used.

In some embodiments, the fiber optic distribution cable assembly 32 may comprise a pre-assembled bundle of individual cables (e.g., jumper cables). Thus, in such embodiments, individual cables are still used as the subunit cables 52, but can be installed together rather than connecting a source location to each destination location as separate installations, one cable at a time. Each tap cable portion 40 may be in the form of a segment of one of the individual cables, with other segments of that individual cable being bundled with segments of other individual cables in the main cable portion 34. In other embodiments, the fiber optic distribution cable assembly 32 may be a pre-engineered network solution that replaces individual cables such that the subunit cables 52 are instead more integrated into an overall cable design. Examples of such pre-engineered cables are disclosed in PCT Patent Publication No. WO2020214762A1 ("the `762 publication"), the disclosure of such examples being incorporated herein by reference.

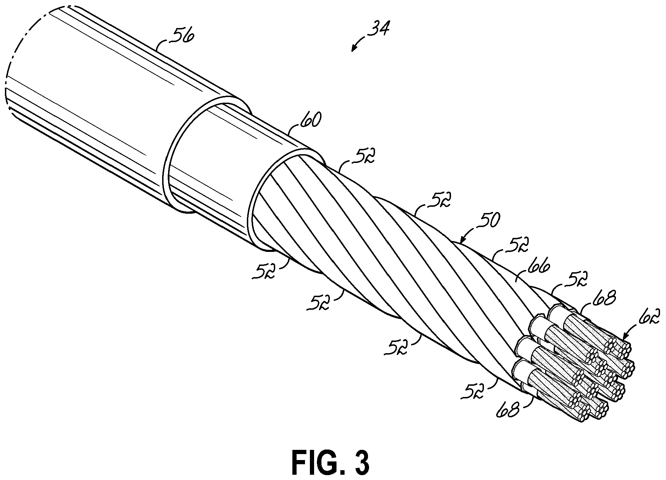

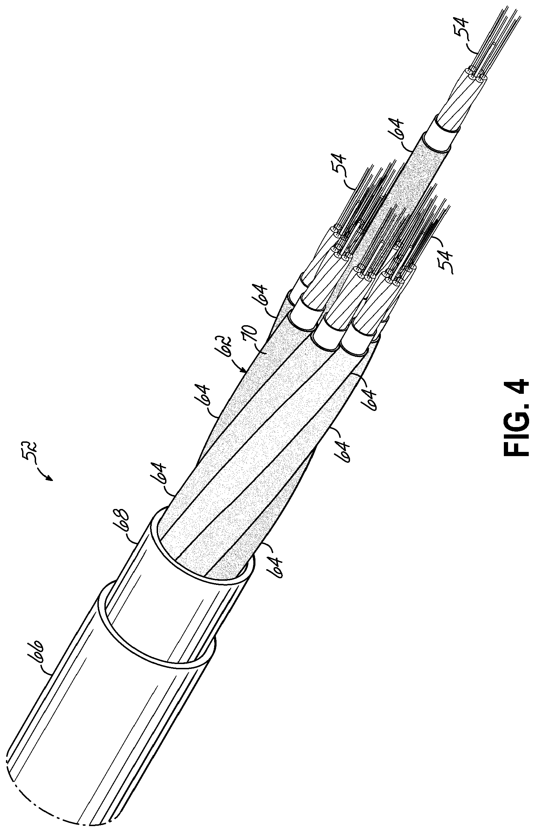

As can be appreciated, the construction of the fiber optic distribution cable assembly 32 may vary. One specific example will now be described with additional reference to Figs. 3 and 4, with the fiber optic distribution cable assembly 32 comprising a fully pre-engineered network solution like those disclosed in the '762 publication.

As shown in Fig. 3, the cable bundle 50 may be stranded and so the subunit cables 52 may be helically twisted relative to a longitudinal axis of the main cable portion 34. With that configuration of the main cable portion 34, in the exemplary embodiment of Fig. 2, subunit cables 52 are separated from the main cable portion 34 at the junction shells 46 to form the tap cable portions 40 with the subunit cable 52 constituting the tap cable 42. Although not shown in Fig. 3, an outer layer of a plurality of subunit cables 52 may be stranded around an inner layer of subunit cables 52 to provide higher optical fiber densities. This reduces any stress or strain concentrations on any single one of the subunit cables 52 (e.g., from bending of the fiber optic distribution cable assembly 32). Other configurations are possible. For example, a central strength element (not shown) may be provided, and the subunit cables 52 may be stranded around the central strength element. Alternatively, stranding may not be used, and the subunit cables 52 may be run substantially parallel through the main cable portion 34.

In the exemplary embodiment of Fig. 3, the subunit cables 52 may be arranged within an outer protective sheath 56. The main cable portion 34 may also include a strain-relief component 60 disposed within the outer protective sheath 56. For example, the strain-relief component 60 may be between the cable bundle 50 and the outer protective sheath 56 and so surround the subunit cables 52. As another example, the strain-relief component 60 may be interspersed within the cable bundle 50 and so be between individual ones of the subunit cables 52. Further in that regard, the strain-relief component 60 may be a layer of longitudinally extending yarns for absorbing tensile loads on the cable bundle 50. Alternatively, the strain-relief component 60 may include a dispersed layer of aramid strands in the region between the outer protective sheath 56 and the cable bundle 50.

In the example embodiment shown in Figs. 3 and 4, each subunit cable 52 includes a subunit bundle 62 (also referred to as a subunit core) of a plurality of tether cables 64 (also referred to as tether subunits). As shown, the subunit bundle 62 is disposed within a subunit sheath 66. In the exemplary embodiment, a strain-relief component 68 is optionally disposed within the subunit sheath 66 and surrounds the subunit bundle 62. In an alternative embodiment, the strain-relief component 68 may be a layer of longitudinally extending yarns for absorbing tensile loads on the subunit bundle 62. In the exemplary embodiment shown, the subunit bundle 62 is stranded so that the tether cables 64 are helically twisted around a longitudinal axis of the subunit bundle 62, but in alternative embodiments the tether cables 64 may not be stranded.

As shown in Fig. 4, each tether cable 64 includes the optical fibers 54. Each tether cable 64 may include a tether jacket 70 that surrounds a predetermined number of optical fibers 54 in the tether cable 64. As an example, as illustrated, each subunit cable 52 includes eight tether cables 64, and each tether cable 64 includes eight, twelve, sixteen, or twenty-four optical fibers 54. Embodiments of the disclosure are not limited to the number of optical fibers 54 shown. Other configurations of subunit cables 52, tether cables 64, and/or optical fibers 54 are possible to address specific design requirements. By way of example only, each tether cable 64 may include from two to twenty-four optical fibers 54, and each subunit cable 52 may include a single tether cable 64 (the latter effectively forming the subunit cable 52) or from two to twenty-four tether cables 64.

Referring to Figs. 2 and 5, in embodiments of the disclosure, the junction shell 46 defines one or more of the tap points 36 in the fiber optic distribution cable assembly 32. The junction shell 46 is designed to ease routing of the fiber optic distribution cable assembly 32 during installation while also protecting and guiding the subunit cables 52 at the tap point 36 at which selected ones of the subunit cables 52 are separated from the remainder of the cable bundle 50. In that regard, the junction shell 46 provides two different positions for the selected subunit cables 52. The selected subunit cable 52 is referred to as a tap cable 74. A technician may pivot the tap cable 74 between the two positions.

In one position shown in Fig. 5, the junction shell 46 secures the tap cable 74 in a parallel position 76 relative to the main cable portion 34. As shown, the tap cable 74, which in the exemplary embodiment is a subunit cable 52, forms a portion of the cable bundle 50 of the main cable portion 34 on the left side of the junction shell 46. At the tap point 36, the tap cable 74 separates from the cable bundle 50. The junction shell 46 maintains the relative separation or tap position of the tap cable 74 and the main cable portion 34 at the tap point 36. This is generally shown in Fig. 2.

After being separated, in the parallel position 76, the tap cable 74 may extend in the same direction (e.g., downstream) as the remainder of the bundle 50. However, the tap cable 74 is no longer stranded with the remainder of the cable bundle 50 of the main cable portion 34 to the right of the junction shell 46 shown in Fig. 5. The arrangement shown in Fig. 5 may be established at the factory and prior to shipment of the fiber optic distribution cable assembly 32 to the installation location. In the parallel position 76, the fiber optic distribution cable assembly 32 can be more easily shipped and more efficiently routed/pulled during installation. For example, the junction shell 46 resists snagging in trays, conduits, etc. during sliding movement of the main cable portion 34. Although not shown in Fig. 5, the tap cable 74 may be temporarily secured (e.g., taped, strapped, banded, etc.) to the main cable portion 34 downstream of the junction shell 46 for ease of transport and routing.

In a second position and with reference to Fig. 6, the junction shell 46 secures the tap cable 74 in a transverse orientation (i.e., non-parallel) relative to the main cable portion 34 at the tap point 36. In the exemplary embodiment, the tap cable 74 is in a generally perpendicular position 80 relative to the main cable portion 34 as the tap cable 74 exits the junction shell 46. That is, the tap cable 74 is in a perpendicular orientation relative to the bundle 50. Other nonperpendicular orientations are possible. The junction shell 46 maintains the perpendicular position 80 of the selected tap cable 74 relative to the main cable portion 34 at the tap point 36 during use of the fiber optic distribution cable assembly 32. In the perpendicular position 80, the tap cable 74 forms the tap cable portions 40, such as that illustrated in Fig. 2. As is described herein, a technician may selectively move the tap cable 74 between the parallel position 76 (Fig. 5) and the perpendicular position 80 (Fig. 6).

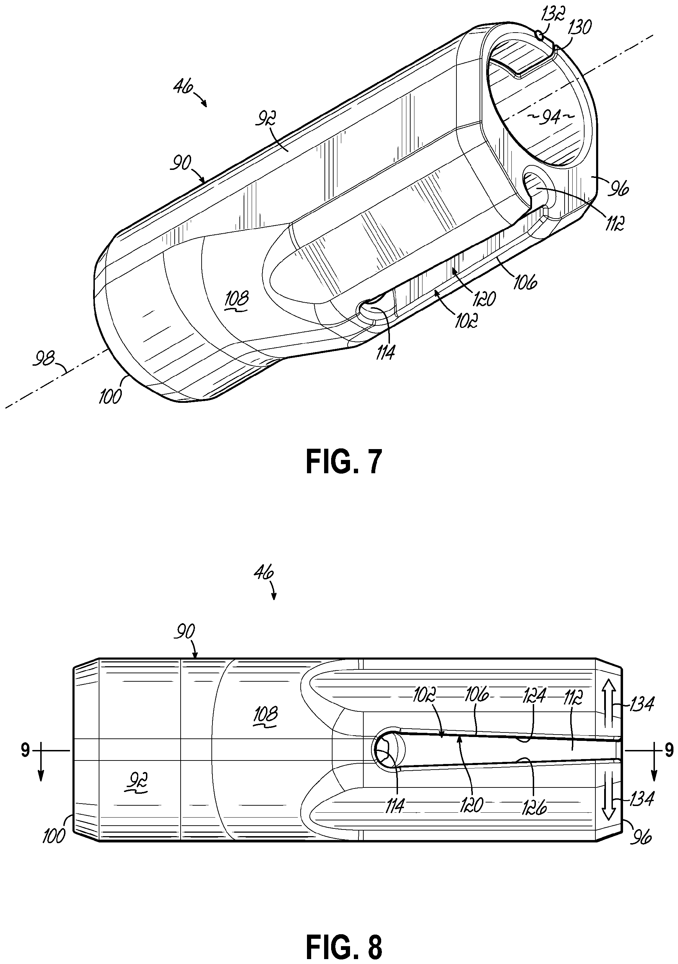

To that end, and with reference to an exemplary embodiment shown in Fig. 7, the junction shell 46 includes a generally tubular body 90 having a side wall 92. The side wall 92 defines a main passage 94 that extends axially through the tubular body 90 and opens at opposing ends 96, 100. The main passage 94 defines an axis 98. As is shown in Figs. 5 and 6, the cable bundle 50 (shown without the outer protective sheath 66) passes through the tubular body 90 via the main passage 94 and so extends from the tubular body 90 at each opposing end 96, 100.

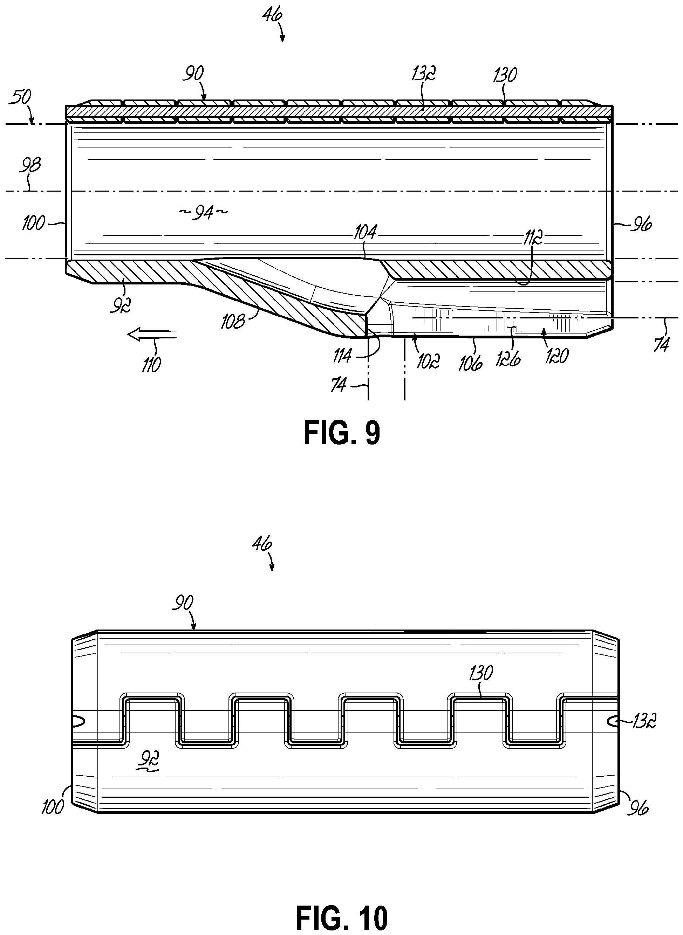

With reference to the exemplary embodiment shown in Figs. 7, 8, and 9, the side wall 92 includes an auxiliary passage 102 that intersects the main passage 94 at a location between the end 96 and end 100. The auxiliary passage 102 opens to the main passage 94 at opening 104 (see Fig. 9) and to an exterior location in the side wall 92 at opening 106. For example, the auxiliary passage 102 may intersect the main passage 94 at a location mid-way between ends 96 and 100. Adjacent the opening 106, the side wall 92 may form a shoulder 108 in the form of a wedge shape projection, which may ease pulling of the junction shell 46 in the direction of arrow 110 while shielding the tap cable 74 from snagging on objects during installation. The shoulder 108 may form a visible bulge to one side of a center line of the tubular body 90 and is positioned radially outward from the opening 104 of the auxiliary passage 102.

As shown in Fig. 9, the bundle 50 (shown in phantom line) is movably secured in the main passage 94, while the tap cable 74 (shown in phantom line in the two positions 76 and 80) is movably secured in the auxiliary passage 102. The tap cable 74 may be alternatively secured in one of the two positions 76 or 80 shown by way of example in Figs. 5 and 6, described above. In that regard, the auxiliary passage 102 includes at least two channels 112 and 114 that individually correspond to the positions 76 and 80, respectively, for the tap cable 74. The channels 112 and 114 each form a portion of the openings 104 and 106 of the auxiliary passage 102 and are dimensioned to movably receive the tap cable 74 during installation or use as described above. For example, with respect to Figs. 5 and 9, the tap cable 74 extends from the main cable portion 34 in the parallel position 76 in the parallel channel 112 of the auxiliary passage 102. In Fig. 9, a portion of the parallel channel 112 adjacent the end 96 is generally parallel to the main passage 94. In this way, the parallel channel 112 orients the tap cable 74 in a direction parallel to the cable bundle 50 exiting the tubular body 90 at the end 96. This direction may be the orientation of the tap cable 74 established at the factory and prior to shipment. In one embodiment, the side wall 92 that forms a barrier between the channel 112 and the main passage 94 may be absent. In this case, the channel 112 may be open to the main passage 94 along the length of the channel 112. Alternatively, the side wall 92 may include a slot along its length to facilitate installation of the tap cable 74.

With reference to Figs. 5, 6, 8, and 9, the technician may move the tap cable 74 from the parallel channel 112 to the perpendicular channel 114 and, consequently, to the perpendicular position 80. As shown in Fig. 9, a portion of the perpendicular channel 114 at its exit location at the outer surface of the side wall 92 is generally perpendicular to the main passage 94. More generally, the channel 114 extends in an outwardly direction (e.g., radially) through the side wall 92 from the main passage 94. In this way, the perpendicular channel 114 orients the tap cable 74 in a direction perpendicular to the cable bundle 50. This direction may be the orientation of the tap cable 74 established following routing of the fiber optic cable assembly 32 in the building 12 and shown in Fig. 2. In each position 76 and 80, the tap cable 74, however, remains in the auxiliary passage 102 without removing the junction shell 46 from the main cable portion 34. This movement may be accomplished with a pivoting motion between the two channels 112 and 114. While a single tap cable 74 is shown in the auxiliary passage 102, the auxiliary passage 102 may be sized to movably secure two or more subunit cables 52 or two or more tether cables 64 separate from the bundle 62 in the positions 76, 80.

With reference to Figs. 7, 8, and 9, the channels 112 and 114 are spaced apart at the opening 106 and at the opening 104 but intersect within the auxiliary passage 102. The channels 112, 114 thereby produce a roughly x-shaped configuration in the auxiliary passage 102 (shown in Fig. 9). The channels 112 and 114 limit the radius of bend of the tap cable 74 as it separates from the cable bundle 50 to above a minimum predetermined amount. In other words, when the tap cable 74 is in either position 76 or position 80, a radius of bend of the tap cable 74 in the auxiliary passage 102 (i.e., in one of the channels 112 and 114) may be no less than 5 mm. In one embodiment, the radius of bend of the tap cable 74 is at least 10 mm. Maintaining greater than a minimum radius of bend reduces the likelihood that the optical fibers 54 fail (e.g., have unacceptable attenuation) during use.

In the embodiment shown and with reference to Figs. 7 and 8, the channels 112 and 114 are separated by a slot or gap 120. The gap 120 provides a pathway for movement of the tap cable 74 between channels 112 and 114 but restricts movement of the tap cable 74 in the auxiliary passage 102. That is, the tap cable 74 does not freely move through the gap 120. The gap 120 is in the side wall 92 and extends in a plane in which resides the axis 98 of the main passage 94. As shown, the channels 112 and 114 are at opposing ends of the gap 120.

In one embodiment, and with reference to Figs. 7 and 9, the gap 120 fills a region between the channels 112 and 114 from their intersection in the auxiliary passage 102 to an outer surface of the side wall 92. The gap 120 is narrower, or generally dimensioned to be smaller in width dimension, than a diameter of the tap cable 74. In the exemplary junction shell 46 shown, there is therefore an interference fit between the gap 120 and the tap cable 74. With regard to the relative dimensional differences within the auxiliary passage 102, by way of example only, side-to-side widths between opposing surfaces 124 and 126 at the opening 106 of the gap 120 is less than either of the diameters of channels 112 and 114.

Further in that regard, and in the exemplary embodiment of Fig. 8, the gap 120 is tapered in the direction toward the parallel position 80 or end 96. The width dimension between opposing surfaces 124, 126 reduces from the channel 114 toward the end 96 so the narrowest portion of the gap 120 is adjacent the channel 112 at the end 96. The gap 120 therefore narrows, for example, from a dimension slightly smaller than the channel 114 to a dimension that is about 50% of the diameter dimension of the channel 112. In alternative embodiments, the narrowing of the gap 120 may be less, such as to a dimension that is about 90% of the diameter dimension of the channel 112, or about 75% of the diameter dimension of the channel 112, or between about 90% and about 50% of the diameter dimension of the channel 112.

With reference now to Figs. 9 and 10, the tubular body 90 includes a seam 130 (Fig. 9) that extends axially the length of the tubular body 90. The seam 130 provides a separation point in the side wall 92 at which a technician may open the tubular body 90 to install the junction shell 46 over the main cable portion 34. In the exemplary embodiment, the seam 130 is opposite the auxiliary passage 102 and is shown as opposing, cooperating dentil-type configurations that receive a pin 132 in the closed position (as shown) to form a joint in the side wall 92.

In one embodiment, the junction shell 46 is pre-molded and then assembled on the main cable portion 34. By way of example, assembly of the junction shell 46 on the cable bundle 50 may include feeding the tap cable 74 through end 100, into main passage 94, into auxiliary passage 102, and then into the channel 112. The opening 104 is sized to accommodate the connectors 44 (Fig. 2) of the tap cable 74. However, the connectors 44 may be fed through the opening 104 serially (i.e., one-at-a-time). Feeding the tap cable 74 may alternatively include opening the junction shell 46 at the seam 130 and inserting the tap cable 74 into the main passage 94 and into the opening 104 thus bypassing insertion through end 100. Once the tap cable 74 is fully fed through the junction shell 46 so that the junction shell 46 is near the main cable portion 34, the seam 130 may be opened and the main cable portion 34 is then inserted through the opening with the subunit cable 52 extending through the auxiliary passage 102. Stated another way, the junction shell 46 is insertable onto the main cable portion 34 by pushing the main cable portion 34 through the opening in the side wall 92 at the location of the seam 130. The junction shell 46 is not overmolded on the cable 34. The pin 132 is then inserted through the tubular body 90 to close/lock the seam 130.

Once the junction shell 46 is positioned on the main cable portion 34, the junction shell 46 may be relocated to different positions on the main cable portion 34 depending on the desired tap point 36 for the tap cable 74. That is, the junction shell 46 may be slidable along the fiber optical cable 34. For example, a technician may slide the junction shell 46 to a predetermined tap point 36, as is generally shown in Fig. 2. In one embodiment, the main passage 94 may be lined with a soft pliable material that resists inadvertent movement of the junction shell 46 once it is positioned and may also accommodate different bundle diameters.

Following assembly of the junction shell 46 on the main cable portion 34, the tap cable 74 is snug in the auxiliary passage 102. Typically, the tap cable 74 will be positioned in the channel 112 at the factory. When the tap cable 74 is received in either one of the channels 112, 114, the junction shell 46 resists movement of the tap cable 74 out of the respective channel 112, 114. Thus, following assembly, the tap cable 74 may be securely held in the channel 112, for example. In that regard, application of a threshold level of force on the tap cable 74 is required to move the tap cable 74 out of the channel 112. The threshold level of force is greater than inadvertent contact of the tap cable 74 with objects during routing or due to gravity. In this way, the tap cable 74 is intended to remain in the channel 112 (or in the channel 114) until a technician intentionally moves it by pulling it from the channel 112.

By way of example, while the tap cable 74 is movable in the auxiliary passage 102, the threshold level of force must be applied to the tap cable 74 to move it from the channel 112 and into the gap 120 because the tap cable 74 must enlarge the gap 120 at the end 96 of the tubular body 90 (indicated by double arrow 134 in Fig. 8) by the difference in dimension between the tap cable 74 and the gap 120 at 134. In that regard, the tubular body 90 may be made of an elastic material or a semi-soft material that resiliently flexes. The gap 120 therefore enlarges to receive the tap cable 74 when a sufficient force is applied to the tap cable 74. A technician may move the tap cable 74 out of the channel 112, for example, after the fiber optic distribution cable assembly 32 is routed in the data center 10 and before the tap cable 74 is coupled to the patch panel 30 or other location at which the fiber optic distribution cable assembly 32 is to be used.

Once the tap cable 74 is in the gap 120, the threshold level of force to move the tap cable 74 is reduced from the force required to produce an initial movement out of the channel 112. In one embodiment, the tapered configuration of the gap 120 may facilitate sliding motion toward the channel 114. That is, a component of the force associated with a squeezing motion of the tubular body 90 on the tap cable 74 in the tapered gap 120 may be in the direction of sliding movement of the tap cable 74 toward the channel 114. This squeezing force may aid sliding movement of the tap cable 74 in that direction while simultaneously resisting movement of the tap cable 74 in the gap 120 toward the channel 112. In that regard, if the technician fails to fully reposition the tap cable 74 into the channel 114, the tap cable 74 may slide from the gap 120 into the channel 114 spontaneously.

In the example shown, the threshold level of force is different in each direction. A force required to move the tap cable 74 in the opposite direction, i.e., from the channel 114 to the channel 112, is greater than a force required to move the tap cable 74 in a direction from the channel 112 to the channel 114. The difference in force being determined by the configuration of the surfaces 124, 126 and dimensions and taper, if any, of the gap 120 relative to the dimensions of the tap cable 74.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A fiber optic cable assembly, comprising:
a main cable portion including a plurality of subunit cables;
one or more tap points along a length of the main cable portion at which at least one subunit cable of the plurality of subunit cables is separated from a remainder of the plurality of subunit cables; and
a junction shell at at least one of the tap points, wherein the junction shell comprises:
a tubular body including a side wall, a main passage that opens at opposing ends of the tubular body, and an auxiliary passage that extends through the side wall and opens to the main passage between the opposing ends at one end of the auxiliary passage and opens to an outer surface of the side wall at another end of the auxiliary passage, the auxiliary passage including a first channel that extends in a direction of the main passage and a second channel that extends in an outwardly direction from the main passage,
wherein the main passage receives the plurality of subunit cables at one of the opposing ends and the auxiliary passage receives the at least one subunit cable of the plurality of subunit cables in one of the first channel or the second channel.

2. The fiber optic cable assembly of claim 1, wherein the auxiliary passage includes a gap that separates the first channel from the second channel, the at least one subunit cable of the plurality of subunit cables being movable out of the first channel into the gap.

3. The fiber optic cable assembly of claim 2, wherein the gap is tapered with a narrowest portion adjacent the first channel.

4. The fiber optic cable assembly of claim 2 or 3, wherein dimensions of the gap and dimensions of the at least one subunit cable of the plurality of subunit cables produces an interference fit between the gap and the at least one subunit cable of the plurality of subunit cables.

5. The fiber optic cable assembly of any preceding claim, wherein the first channel and the second channel intersect in the auxiliary passage.

6. The fiber optic cable assembly of any preceding claim, wherein the junction shell is movable along the main cable portion.

7. The fiber optic cable assembly of any preceding claim, wherein at least a portion of the second channel is oriented perpendicularly to the main passage to position the at least one subunit cable of the plurality of subunit cables in a perpendicular orientation relative to the main cable portion in the main passage.

8. The fiber optic cable assembly of any preceding claim, wherein the tubular body includes a shoulder adjacent the auxiliary passage for shielding the at least one subunit cable of the plurality of subunit cables at the tap point.

9. The fiber optic cable assembly of any preceding claim, wherein the tubular body includes a seam in the side wall at which the tubular body is configured to be opened to receive the main cable portion.

10. The fiber optic cable assembly of claim 9, wherein the seam receives a pin to lock the seam.

11. A method of preparing a fiber optic cable assembly according to any of claims 1-10, the method comprising:
placing the junction shell around the main cable portion, wherein the placing includes positioning the main cable portion in the main passage;
separating at least one subunit cable of the plurality of subunit cables from the main cable portion;
positioning the separated at least one subunit cable of the plurality of subunit cables in the auxiliary passage; and
moving the junction shell to a predetermined tap point along the main cable portion.

12. The method of claim 11, wherein the side wall includes a seam and wherein placing the junction shell includes opening the side wall at the seam.

13. The method of claim 12, wherein the junction shell includes a pin and following placing the junction shell, the method further comprises inserting the pin to lock the seam.

14. The method of any of claims 11-13, wherein the auxiliary passage includes a first channel that extends in a direction of the main passage and a second channel that is spaced apart from the first channel and that extends in outwardly direction from the main passage, wherein prior to shipping the fiber optic cable assembly, positioning the separated at least one subunit cable of the plurality of subunit cables in the first channel.
